# EUROPEAN PATENT APPLICATION

(11) **EP 3 040 314 A1**
(43) Date of publication of application: **06.07.2016**
(21) Application number: 14840014.6
(22) Date of filing: 14.04.2014
(51) Int. Cl.: C02F 1/58, G21F 9/10, G21F 9/12

(54) **METHOD FOR REDUCING STRONTIUM ION CONCENTRATION**

(30) Priority: 29.08.2013 JP 2013177514
(71) Applicant: Kyowa Chemical Industry Co., Ltd, Takamatsu-shi, Kagawa 761-0113 (JP)
(72) Inventor: SUZUKI Takafumi, Sakaide-shi Kagawa 762-0012 (JP)
(74) Representative: Raynor, Stuart Andrew
(86) International application number: PCT/JP2014/061107
(87) International publication number: WO 2015/029495

(57) **Abstract**

A method of reducing the strontium ion concentration of an aqueous solution.

The method of reducing the strontium ion concentration of an aqueous solution, comprises the step of:
reacting a soluble compound (A) of at least one metal selected from the group consisting of calcium and magnesium with a soluble alkali carbonate (B) in an aqueous solution containing a strontium ion to produce a metal carbonate and incorporate the strontium ion into the metal carbonate.

## Description

### TECHNICAL FIELD

The present invention relates to a method of reducing the strontium ion concentration of an aqueous solution.

### BACKGROUND ART

Due to the accident at the Fukushima No. 1 nuclear power plant caused by the Great East Japan Earthquake, the discharge of a large amount of the core cooling water of the nuclear reactor polluted by radioactive strontium has become a big problem. As a method of removing radioactive strontium, there is adsorption immobilization using an absorbent.

It is reported that a cerium phosphate compound represented by Ce (HPO₄)ₓ·yH₂O (in the formula, x = 1. 8 to 2.1, y = 1 to 4) exhibits high immobilizing ability as this absorbent (Patent Document 1). However, since the cerium phosphate compound has a high adsorption temperature and a long processing time, it has an economical problem.

It is also reported that crystalline titanate fibers exhibit high strontium immobilizing ability (Nonpatent Document 1). However, since the crystalline titanate fibers require a high-temperature heat treatment at 1,000°C for the production of a stable immobilizing agent, it has an economical problem as well.

### (Prior Art Documents)

### (Patent Document)

(Patent Document 1) JP Patent No. 2535783

### (Nonpatent Document)

(Nonpatent Document1) Chemical Letters, page 957, 1981

### DISCLOSURE OF THE INVENTION

It is an object of the present invention to provide a method of reducing the strontium ion concentration of an aqueous solution effectively at a low cost, which overcomes the above defects of the conventional method of removing a strontium ion.

The inventors of the present invention found that when a calcium ion and/or a magnesium ion are/is reacted with a carbonate ion in water containing a strontium ion to produce a metal carbonate, the strontium ion is incorporated into the produced metal carbonate, thereby making it possible to reduce the concentration of the strontium ion in water. The present invention was accomplished based on this finding.

That is, the present invention is a method of reducing the strontium ion concentration of an aqueous solution, comprising the step of:
reacting a soluble compound (A) of at least one metal selected from the group consisting of calcium and magnesium with a soluble alkali carbonate (B) in an aqueous solution containing a strontium ion to produce a metal carbonate and incorporate the strontium ion into the metal carbonate.

### BEST MODE FOR CARRYING OUT THE INVENTION

In the present invention, the mechanism capable of reducing the strontium ion concentration of an aqueous solution is not due to the production of strontium carbonate by injecting the soluble alkali carbonate (B).

It is not due to the production of strontium hydroxide as well. This is understood from the fact that the strontium ion concentration of an aqueous solution is not reduced even when a soluble calcium compound (A1) or a soluble magnesium compound (A2) is added to an aqueous solution containing strontium and a sodium hydroxide aqueous solution is further added to produce calcium hydroxide or magnesium hydroxide.

In the present invention, it is considered that the strontium ion concentration of an aqueous solution can be reduced by incorporating the strontium ion into the structure of the produced metal carbonate.

The soluble compound (A) is preferably at least one compound selected from the group consisting of a soluble calcium compound (A1) and a soluble magnesium compound (A2).

Examples of the soluble calcium compound (A1) include calcium chloride, calcium nitrate, calcium acetate and calcium hydroxide. Out of these, calcium chloride is preferred as it is cheap. Although calcium hydroxide is cheap, after it is injected into an aqueous solution, an exhaust gas (carbonate gas) must be blown from a boiler or the like for a long time. Therefore, it cannot be said that this is a simple method.

Examples of the soluble magnesium compound (A2) include magnesium chloride, magnesium nitrate, magnesium sulfate, magnesium acetate and magnesium hydroxide. Out of these, magnesium sulfate is preferred as it is cheap. Although magnesium hydroxide is cheap, after it is injected into an aqueous solution, an exhaust gas (carbonate gas) must be blown from a boiler or the like for a long time. Therefore, it cannot be said that this is a simple method.

Examples of the soluble alkali carbonate (B) include lithium carbonate, sodium carbonate, potassium carbonate, ammonium carbonate and bicarbonates thereof, out of which sodium carbonate is preferred as it is cheap.

The metal carbonate is preferably at least one compound selected from the group consisting of calcium carbonate and magnesium carbonate.

The amount of the soluble compound (A) is such that the amount of the metal carbonate produced in the aqueous solution becomes preferably 0.2 to 3.0 g, more preferably 0.5 to 3.0 g based on 100 mL of the aqueous solution.

The amount of the soluble calcium compound (A1) is such that the amount of the calcium carbonate produced in the aqueous solution becomes preferably 0.2 to 1.0 g, more preferably 0.3 to 1.0 g based on 100 mL of the aqueous solution. When the amount of the produced calcium carbonate becomes smaller than 0.2 g based on 100 mL of the aqueous solution, the concentration of the residual strontium ion in the aqueous solution becomes high disadvantageously. When the amount of the produced calcium carbonate becomes larger than 1.0 g based on 100 mL of the aqueous solution, the concentration of the residual strontium ion in the aqueous solution rarely decreases relative to 1.0 g, which is not preferred from the economical point of view.

The amount of the soluble magnesium compound (A2) is such that the amount of magnesium carbonate produced in the aqueous solution becomes preferably 1.0 to 3.0 g, more preferably 2.0 to 3.0 g based on 100 mL of the aqueous solution. When the amount of the produced magnesium carbonate becomes smaller than 1.0 g based on 100 mL of the aqueous solution, the concentration of the residual strontium ion in the aqueous solution becomes high disadvantageously. When the amount of the produced magnesium carbonate becomes larger than 3.0 g based on 100 mL of the aqueous solution, the concentration of the residual strontium ion in the aqueous solution rarely decreases, which is not preferred from the economical point of view.

The molar amount of the soluble alkali carbonate (B) is preferably 0.9 to 1.1 times the theoretical molar amount that enables it to become a metal carbonate based on the amount of the soluble compound (A).

### EXAMPLES

The following examples are provided for the purpose of further illustrating the present invention but are in no way to be taken as limiting.

The strontium ion concentration was measured by using an inductively coupled plasma emission spectrophotometer (ICP: SPS3100 of SII Nanotechnology Co., Ltd.).

### (Example 1)

100 mL of an aqueous solution containing 10 mg/L of strontium and 0.147 g (1 mmol) of calcium chloride dihydrate were injected into a 200 mL beaker, 1.34 mL (1 mmol) of an aqueous solution containing 0.745 mol/L of sodium carbonate was injected under agitation with a magnetic stirrer, and pH of the resulting solution was measured after 30 minutes of agitation. Then, solid liquid separation was carried out by using a membrane filter to measure the strontium ion concentration of the filtrate with the inductively coupled plasma emission spectrophotometer. The result is shown in Table 1 (pH and the strontium ion concertation of the filtrate after processing).

### (Example 2)

The operation of Example 1 was repeated except that the amount of the injected calcium chloride dihydrate was changed to 0.777 g (5.28 mmol) and the amount of the injected aqueous solution containing 0.745 mol/L of sodium carbonate was changed to 7.1 mL (5.28 mmol). The result is shown in Table 1.

### (Example 3)

The operation of Example 1 was repeated except that the amount of the injected calcium chloride dihydrate was changed to 1.467 g (9.97 mmol) and the amount of the injected aqueous solution containing 0.745 mol/L of sodium carbonate was changed to 13.38 mL (9.97 mmol). The result is shown in Table 1.

### (Comparative Example 1)

100 mL of an aqueous solution containing 10 mg/L of strontium was injected into a 200 mL beaker, 1.14 mL (0.0114 mmol) of an aqueous solution containing 0.01 mol/L of sodium carbonate was injected under agitation with a magnetic stirrer, and pH of the resulting solution was measured after 30 minutes of agitation. Then, solid liquid separation was carried out by using a membrane filter to measure the strontium ion concentration of the filtrate with the inductively coupled plasma emission spectrophotometer. The amount of sodium carbonate was theoretically equivalent to the amount of strontium contained in the sampled strontium solution. The result is shown in Table 1.

Although attempts were made to produce strontium carbonate with sodium carbonate in Comparative Example 1, no reduction in the strontium ion concentration of the aqueous solution was observed.

### (Comparative Example 2)

100 mL of an aqueous solution containing 10 mg/L of strontium was injected into a 200 mL beaker, and 1.0 g of the first-grade calcium carbonate reagent of Wako Pure Chemical Industries, Ltd. was injected under agitation with a magnetic stirrer, and pH of the resulting solution was measured after 30 minutes of agitation. Then, solid liquid separation was carried out by using a membrane filter to measure the strontium ion concentration of the filtrate with the inductively coupled plasma emission spectrophotometer. The result is shown in Table 1.

### (Example 4)

100 mL of an aqueous solution containing 10 mg/L of strontium and 0.406 g (1.65 mmol) of magnesium sulfate heptahydrate were injected into a 200 mL beaker, 2.23 mL (1.66 mmol) of an aqueous solution containing 0.745 mol/L of sodium carbonate was injected under agitation with a magnetic stirrer, and pH of the resulting solution was measured after 30 minutes of agitation. Then, solid liquid separation was carried out by using a membrane filter to measure the strontium ion concentration of the filtrate with the inductively coupled plasma emission spectrophotometer. The result is shown in Table 1.

### (Example 5)

The operation of Example 4 was repeated except that the amount of the injected magnesium sulfate heptahydrate was changed to 1.29 g (5.24 mmol) and the amount of the injected aqueous solution containing 0.745 mol/L of sodium carbonate was changed to 7.0 mL (5.23 mmol). The result is shown in Table 1.

### (Example 6)

The operation of Example 4 was repeated except that the amount of the injected magnesium sulfate heptahydrate was changed to 2.61 g (10.6 mmol) and the amount of the injected aqueous solution containing 0.745 mol/L of sodium carbonate was changed to 14.2 mL (10.6 mmol). The result is shown in Table 1.

### (Example 7)

The operation of Example 4 was repeated except that the amount of the injected magnesium sulfate heptahydrate was changed to 5.18 g (21 mmol) and the amount of the injected aqueous solution containing 0.745 mol/L of sodium carbonate was changed to 28.2 mL (21 mmol). The result is shown in Table 1.

### (Example 8)

The operation of Example 4 was repeated except that the amount of the injected magnesium sulfate heptahydrate was changed to 7.76 g (31.5 mmol) and the amount of the injected aqueous solution containing 0.745 mol/L of sodium carbonate was changed to 42.28 mL (31.5 mmol). The result is shown in Table 1.

### (Comparative Example 3)

100 mL of an aqueous solution containing 10 mg/L of strontium was injected into a 200 mL beaker, 1.0 g (Mg content: 25.5 %) of magnesium carbonate (trade name: Keta) manufactured by Kyowa Chemical Industry Co., Ltd. was injected under agitation with a magnetic stirrer, and pH of the resulting solution was measured after 30 minutes of agitation. Then, solid liquid separation was carried out by using a membrane filter to measure the strontium ion concentration of the filtrate with the inductively coupled plasma emission spectrophotometer. The result is shown in Table 1 (pH and the strontium ion concertation of the filtrate after processing).

**Table 1**

| | Amount of calcium chloride | Amount of sodium carbonate | Calculated amount of calcium carbonate produced | pH after processing | Strontium ion concertation of filtrate after processing |
|---|---|---|---|---|---|
| Unit | g (mmol) | (mmol) | g/100 mL aqueous solution | - | ppm |
| Example 1 | 0.147(1) | (1) | 0.10 | 10.41 | 1.8 |
| Example 2 | 0.777(5.28) | (5.28) | 0.53 | 10.41 | 0.013 |
| Example 3 | 1.467(9.97) | (9.97) | 1.0 | 10.15 | 0.010 |
| Comparative Example 1 | - | (0.0114) | - | 7.68 | 10.0 |
| Comparative Example 2 | - | | 1.0 | 9.65 | 9.9 |

| | Amount of magnesium chloride | Amount of sodium carbonate | Calculated amount of magnesium carbonate produced | pH after processing | Strontium ion concertation of filtrate after processing |
|---|---|---|---|---|---|
| Unit | g(mmol) | (mmol) | g/100 mL aqueous solution | - | ppm |
| Example 4 | 0.406(1.65) | 1.66 | 0.16 | 10.22 | 3.0 |
| Example 5 | 1.29(5.24) | 5.23 | 0.50 | 9.93 | 1.4 |
| Example 6 | 2.61(10.6) | 10.6 | 1.0 | 9.69 | 0.59 |
| Example 7 | 5.18(21) | 21 | 2.0 | 9.77 | 0.11 |
| Example 8 | 7.76(31.5) | 31.5 | 3.0 | 9.73 | 0.080 |
| Comparative Example 3 | - | | 1.0 | 7.55 | 5.5 |

### Remarks:

1) Amount of calcium carbonate (g): The Ca content of calcium carbonate is calculated as 40 % from the chemical formula CaCo₃. . M = 100.08. Therefore, the amount (g) of Ca contained in the calcium chloride dihydrate in use was calculated so as to obtain the amount of calcium carbonate therefrom.
2) Amount of magnesium carbonate (g): Mg (g) contained in magnesium sulfate heptahydrate in use was obtained based on the condition that the Mg content of magnesium carbonate used in Comparative Example 3 was 25.5 %.

As obvious from Table 1, the strontium ion concentration of water can be reduced to a ppb order by using the processing method of the present invention.

### Effect of the Invention

According to the method of the present invention, the strontium ion concentration of water can be reduced by a relatively inexpensive and simple method.

### Industrial Applicability

The method of the present invention can be used to remove strontium. Further, the method of the present invention is expected to be used for the reduction of the concentration of the radioactive isotope⁹⁰ Sr of strontium in water.

## Claims

1. A method of reducing the strontium ion concentration of an aqueous solution, comprising the step of:
reacting a soluble compound (A) of at least one metal selected from the group consisting of calcium and magnesium with a soluble alkali carbonate (B) in an aqueous solution containing a strontium ion to produce a metal carbonate and incorporate the strontium ion into the metal carbonate.

2. The method according to claim 1, wherein the soluble compound (A) is at least one compound selected from the group consisting of a soluble calcium compound (A1) and a soluble magnesium compound (A2).

3. The method according to claim 2, wherein the soluble calcium compound (A1) is calcium chloride.

4. The method according to claim 2, wherein the soluble magnesium compound (A2) is magnesium sulfate.

5. The method according to claim 1, wherein the soluble alkali carbonate (B) is sodium carbonate.

6. The method according to claim 1, wherein the metal carbonate is at least one selected from the group consisting of calcium carbonate and magnesium carbonate.

7. The method according to claim 1, wherein the amount of the soluble compound (A) is such that the amount of the metal carbonate produced in the aqueous solution becomes 0.2 to 3.0 g based on 100 mL of the aqueous solution.

8. The method according to claim 7, wherein the amount of the soluble calcium compound (A1) is such that the amount of calcium carbonate produced in the aqueous solution becomes 0.2 to 1.0 g based on 100 mL of the aqueous solution.

9. The method according to claim 7, wherein the amount of the soluble magnesium compound (A2) is such that the amount of magnesium carbonate produced in the aqueous solution becomes 1.0 to 3.0 g based on 100 mL of the aqueous solution.

10. The method according to claim 1, wherein the molar amount of the soluble alkali carbonate (B) is 0. 9 to 1.1 times the theoretical molar amount that enables it to become a metal carbonate based on the amount of the soluble compound (A).
